**Europäisches Patentamt**

**European Patent Office**

**Office européen des brevets**

(19)

(11) Veröffentlichungsnummer : **0 201 550**
**B1**

(12) **EUROPÄISCHE PATENTSCHRIFT**

(45) Veröffentlichungstag der Patentschrift :
24.01.90

(21) Anmeldenummer : 85905626.9

(22) Anmeldetag : 12.11.85

(86) Internationale Anmeldenummer :
PCT/EP 85/00606

(87) Internationale Veröffentlichungsnummer :
WO/8603020 (22.05.86 Gazette 86/11)

(51) Int. Cl.⁵ : **G 03 B 23/02**

(54) VORRICHTUNG ZUM UMSCHICHTEN EINES BLATTSTAPELS.

(30) Priorität : 13.11.84 DE 3441464

(43) Veröffentlichungstag der Anmeldung :
20.11.86 Patentblatt 86/47

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
FR--A-- 2 403 207

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Röhl, Wolf Horst, Dipl.-Phys., Dr. et al
Dipl.-Ing. K. Sparing Dipl.-Phys. Dr. W.H. Röhl Rethelstrasse 123
D-4000 Düsseldorf 1 (DE)

## Beschreibung

Die Erfindung betrifft eine Vorrichtung zum zyklischen Umschichten eines Stapels rechteckiger oder quadratischer Blätter, insbesondere von Fotoabzügen (Bildern), mit einem ersten Rahmenteil und einem zweiten Rahmenteil, das relativ zu dem ersten hinundherbeweglich ist. Die Rahmenteile umfassen im zusammengeführten Zustand den Blattstapel und enthalten Mittel, die beim Auseinanderbewegen der Rahmenteile an einem Stapelende ein Blatt abnehmen und beim Wiederzusammenführen der Rahmenteile das Blatt an der andern Stapelseite wieder zufügen. Hier und im folgenden sollen die Worte « Blatt » und « Bilde » synonym gebraucht werden.

Solche Vorrichtungen, gelegentlich als « Bildwechsler » bezeichnet, sind aus den US-PSen 4238898, 4238899, 4241528, 4241529, 4245417, 4259802 und 4376348 bekannt. Bei den bekannten Bildwechslern ist auch eine Einrichtung vorgesehen, um die Wechselfunktion zu inaktivieren, indem eines der dafür vorgesehenen Mittel unwirksam gemacht wird, z. B. ein an der freiliegenden Fläche des zu vereinzelnden Blattes angreifender Haftbelag-Mitnehmer, der manuell außer Eingriff mit dem Stapel gebracht wird.

Hierfür muß in den Rahmenteilen Platz in Richtung der Stapeldicke geschaffen werden, was aus ästhetischen Gründen unerwünscht ist.

Grundsätzlich umfassen die an der Wechselfunktion beteiligten Elemente eine Trenneinrichtung, die einen Durchlaßspalt für das abzutrennende Blatt definiert, eine Zufuhreinrichtung, die der Trenneinrichtung Blätter zuführt, eine Halteeinrichtung zum Halten des abgetrennten Blattes in dem betreffenden Rahmenteil, und eine Leiteinrichtung, die das abgetrennte Blatt für das Wiederzuführen auf den Stapel oder unter den Stapel präsentiert.

Gemäß obigen Ausführungen wird also die Zufuhreinrichtung und, je nach Bauart, auch die Halteeinrichtung inaktiviert, so daß der Gesamtstapel — vorzugsweise mittels des nach dem Auseinanderbewegen der Rahmenteile zugänglichen Rahmenteils — aus der Vorrichtung entnommen werden kann.

Dabei werden von einem Betätigungsorgan, das von außen zugänglich ist, relativ große Kräfte übertragen, da die Vorspannung eines kräftigen Federandrucksystems zu überwinden ist. Entsprechend sind die Komponenten dimensioniert. - Aufgabe der Erfindung ist es, die Inaktivierung mittels relativ kleiner Komponenten zu bewirken, die entsprechend preisgünstig gefertigt werden können und leichter in der Vorrichtung Platz finden. Anspruch 1 definiert die Lösung gemäß der Erfindung. Bei der Zufuhr der Blätter zur Trenneinrichtung ist dafür gesorgt, daß bei blockiertem Durchlaßspalt die Blätter, sobald eine hinreichend große Kraft entgegen der Wirkrichtung der Zufuhreinrichtung ausgeübt wird, freigegeben und als Gesamtstapel aus dem freiliegenden Rahmenteil entnommen werden können. Die Zufuhreinrichtung kann dabei z. B. als eine an der Blattkante angreifende Kontaktfläche ausgebildet sein, die bei entsprechender auf das Blatt ausgeübter Kraft von der Blattkante ableitet.

Weitere Vorteile und Ausgestaltungen der Erfindung sind der nachfolgenden Beschreibung und den Ansprüchen zu entnehmen.

Die Erfindung wird nachstehend anhand der in den beigefügten Abbildungen dargestellten Ausführungsbeispiele näher erläutert.

Fig. 1 zeigt in Draufsicht und teilweise aufgeschnitten einen Bildwechsler mit teilweise ausgezogenem Schieber.

Fig. 2 bis 10 zeigen Schnitte und Einzelheiten des Bildwechslers von Fig. 1.

Fig. 11 bis 16 zeigen eine zusätzliche Ausführungsform eines Bildwechslers.

Fig. 17 bis 20 zeigen weitere Ausführungsbeispiele für Einrichtungen zur Gesamtentnahme des Bilderstapels.

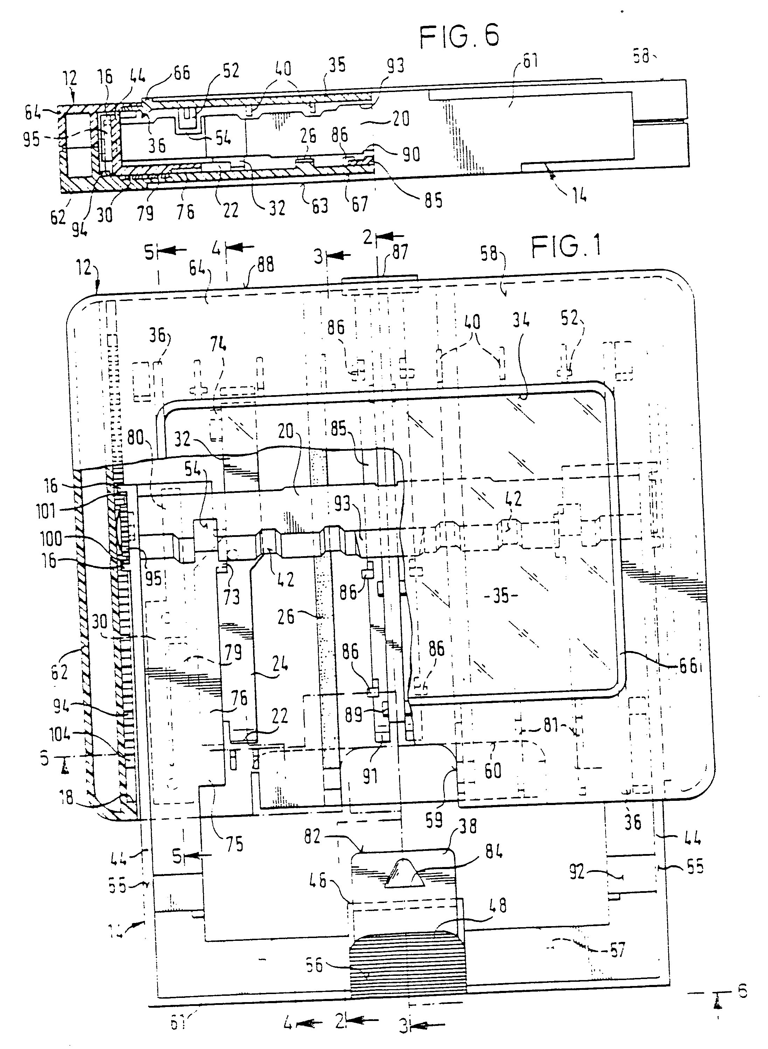

Der in Fig. 1 bis 10 dargestellte Bildwechsler umfaßt als erstes Rahmenteil ein Gehäuse 12 und als zweites Rahmenteil einen Schieber 14 zur Aufnahme eines Bilderstapels, wobei der Schieber 14 aus dem Gehäuse 12 um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gehalten wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers 14 den Bilderstapel (in Fig. 1 nicht gezeigt) gegen ein Sichtfenster, dessen innere Kontur mit 34 bezeichnet ist. Das dann im Stapel oberste Bild, ein Fotoabzug, soll dann möglichst plan liegen ; zu diesem Zweck ist es an seinem Umfang in einer Ebene abgestützt, die definiert ist durch seitliche Rippen 36, die Unterseite eines Griffstück-Schiebeteils 38 und auf der ihm gegenüberliegenden Seite durch an das Gehäuse angeformte Rippen 40.

Fig. 1 zeigt die teilausgezogene Position des Schiebers 14. Im eingeschobenen Zustand liegt der Separatorsteg jenseits dieser Rippen 40 : da er aber weiter zum Fenster 35 vorsteht, das dem Niveau dieser Rippen entspricht, weist er für das Passieren derselben Einschnitte 42 auf.

Die Abstützung der Kanten des Stapels erfolgt seitlich (d. h. parallel zur Auszugsrichtung) durch Holme 44 des Schiebers. Frontseitig, das heißt auf der Seite des Schiebers, die beim Auszug am. weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte ; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen lechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

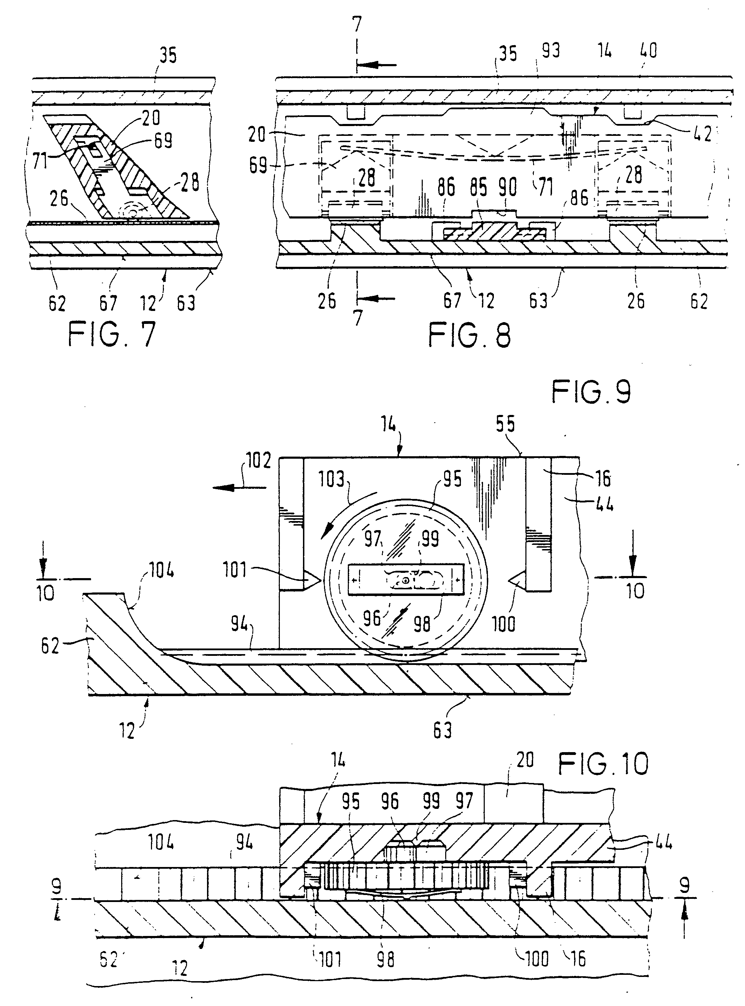

Das Gehäuse ist aus drei Teilen zusammengesetzt : Der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes den Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmenden liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/ Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

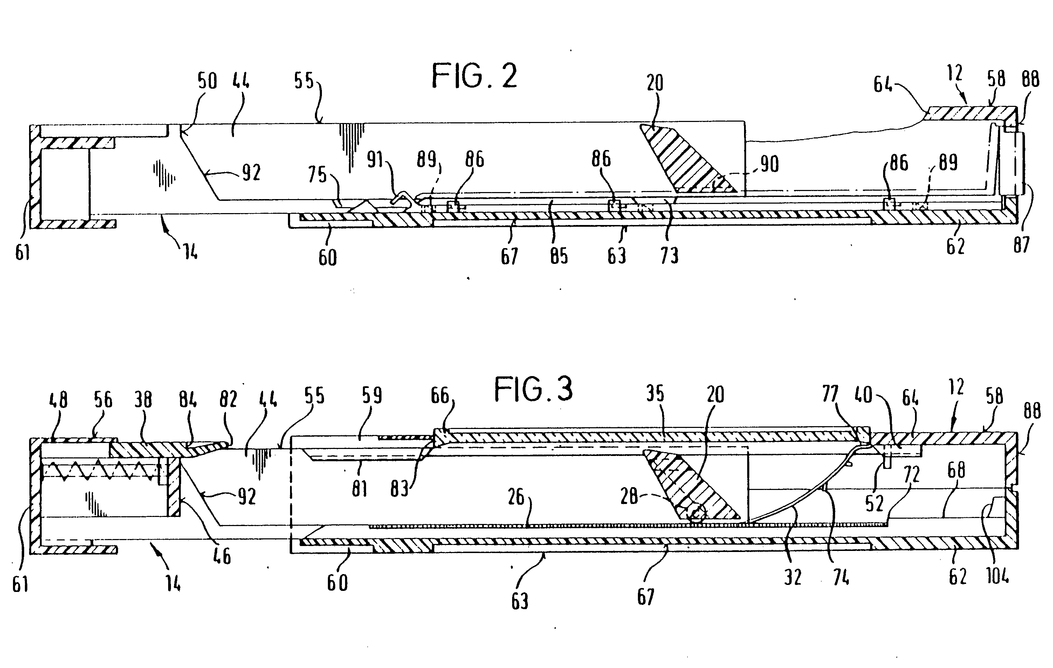

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts « wandern », in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

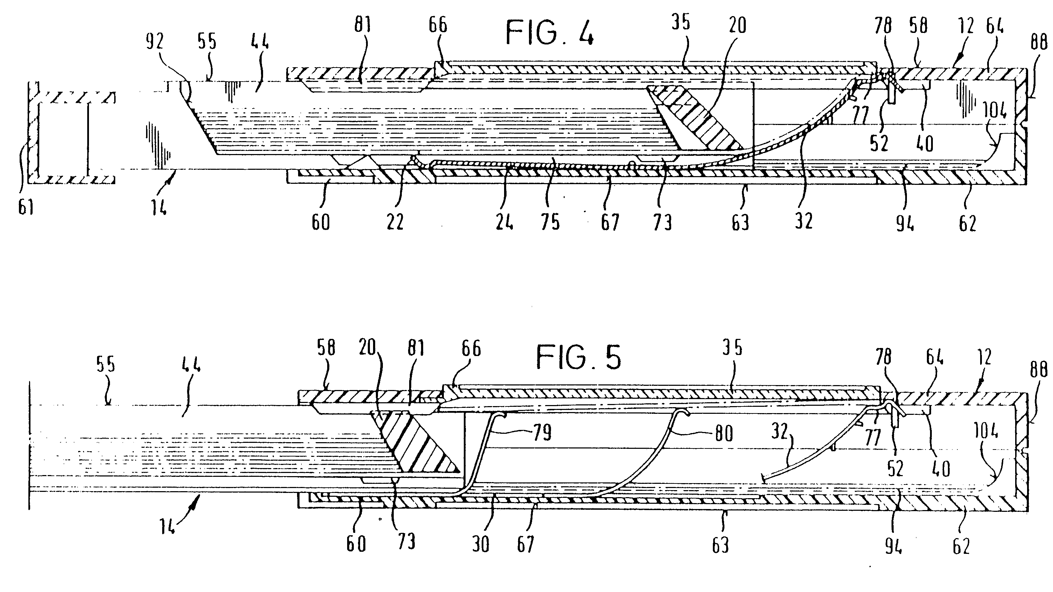

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung : Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen ; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäuses durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert ; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Unterhalb der Anschlagflächen 50 weist daher die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als « Fortsetzung » der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug geben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

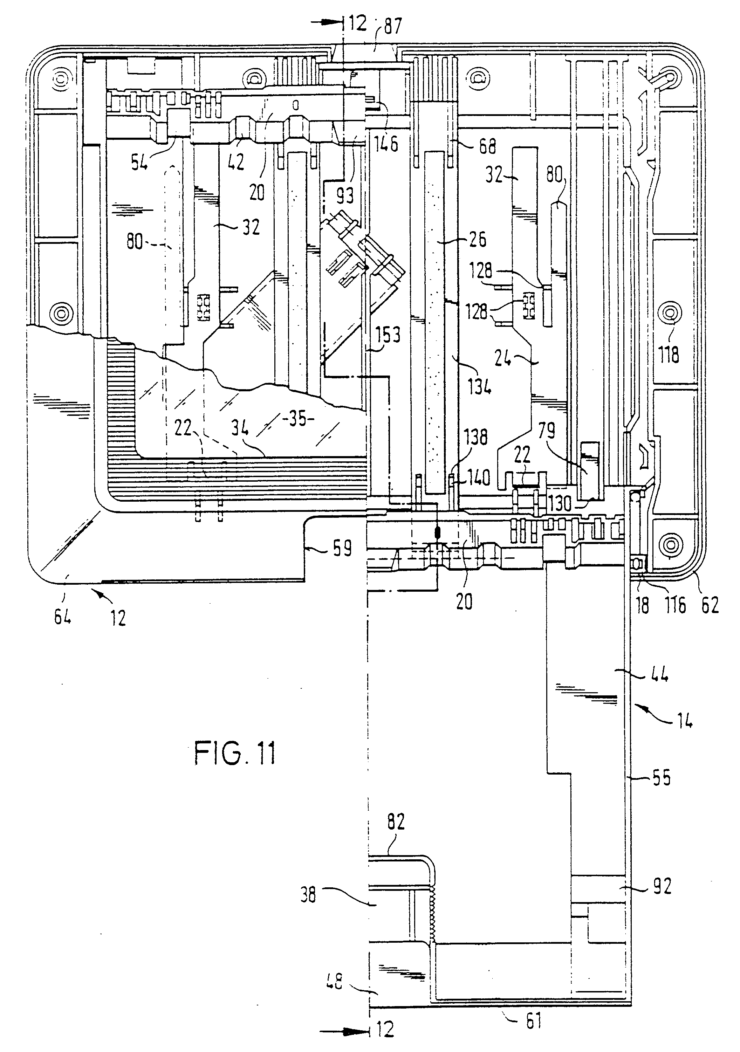

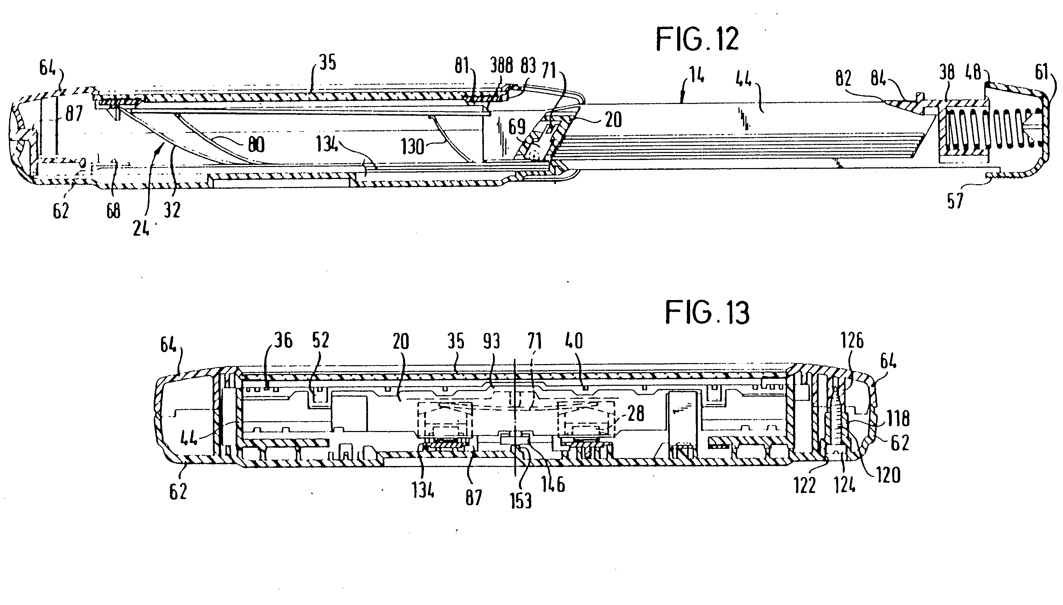

In den Fig. 11 bis 16 ist ein weiteres Ausführungsbeispiel eines Bildwechslers dargestellt. Im Gehäuse 12 ist der Schieber 14 verschieblich aufgenommen ; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 11 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Die beiden Haftbelagstreifen 26 sind auf je einem gesondert gefertigten Steg 134 angeordnet. Beidseits des Streifens 26 kann gegebenenfalls der Steg 134 angeformte Federbrücken aufweisen, die als Hilfsfedern nach Überlaufen durch den Separatorsteg 20 nach oben ausfedern und die Bildkante liften, oder es können hierzu gesonderte metallische Federblätter vorgesehen sein.

Die Stege 134 sind spiegelsymmetrisch gestaltet, also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken der Nasen 142 in entsprechende Rinnen der Gehäuseunterschale, und die genaue Positionierung erfolgt mittels eines der beiden Zapfen 144, nämlich mittels des dem Schiebergriff abgewandten Zapfens, während dem anderen Zapfen ein gehäuseseitiges Langloch zugeordnet ist.

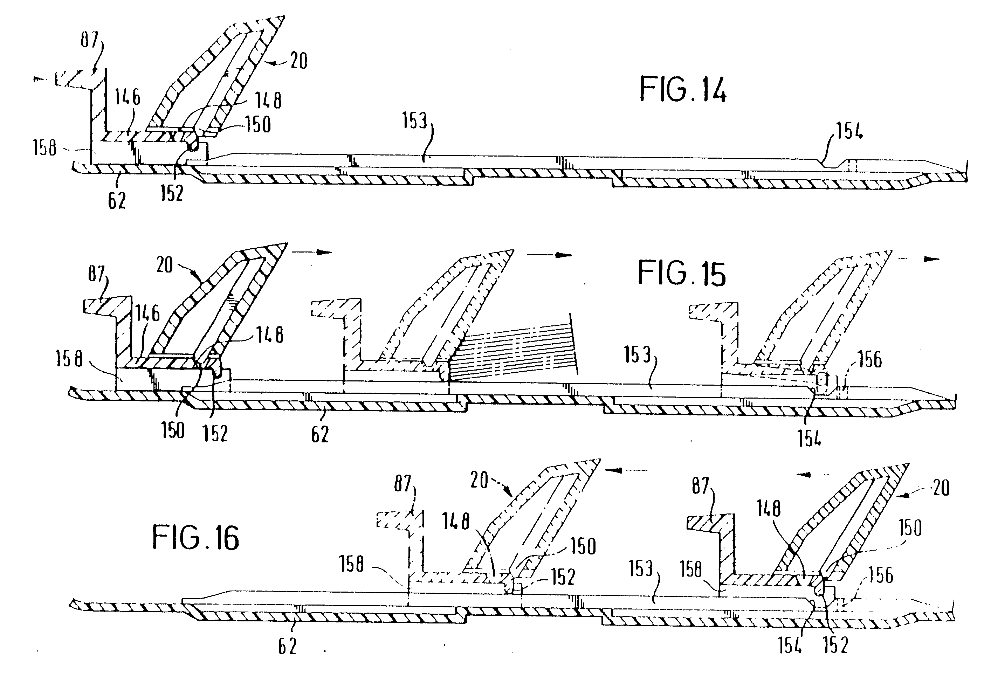

Die Stege 134 bilden zugleich die Führung für die in der Symmetrieebene angeordnete Taste 87, deren Gestaltung, Anordnung und Funktion schematisch in Fig. 14 bis 16 dargestellt ist. Fig. 14 zeigt die Betriebsposition, das heißt in dieser Position der Taste 87 erfolgt der normale Wechselvorgang. Die Taste 87 trägt einen auf den Separatorsteg 20 hin gerichteten Fortsatz 146 mit einer Kerbe 148, zu der komplementär ein Doppelkeil 150 an der Unterseite des Separatorsteges 20 ist. Drückt man nun bei festgehaltenem Schieber auf die Taste 87, so federt ihr Fortsatz 146 nach unten aus, bis der Doppelkeil 150 in die Kerbe 148 einrastet (Fig. 15, links). Die vom Fortsatz 146 nach unten ragende Sperrnase 152 blockiert nun die Trenneinrichtung für die Kante des untersten Bildes im Stapel, so daß bei Zug am Schieber die Haken 22 auch von der Kante dieses Bildes abgleiten, wenn der Separatorsteg zusammen mit der Taste 87 auf die ihm zugewandte Stapelkante einwirkt und den Stapel mitnimmt (Fig. 15, Mitte). Hierbei verhindert eine Rippe 153 ein Ausrasten des Fortsatzes 146, der auf der Rippe 153 entlang läuft. Nahe der äußeren Endposition des Schiebers 14 trifft die Sperrnase 152 auf einen Einschnitt 154 in der Rippe 153, während die Tastenführungslappen 158 auf einen Anschlag 156 auflaufen. Der Fortsatz kann demgemäß nach unten ausfedern, wenn der Schieber weitergezogen wird, und sich so vom Separator lösen (Fig. 15, rechts). Beim Wiedereinschub des Schiebers 14 ist die Taste lose beweglich, so daß der Doppelkeil sie einfach vor sich her schiebt, bis sie ihre Endposition wieder erreicht hat (Fig. 16).

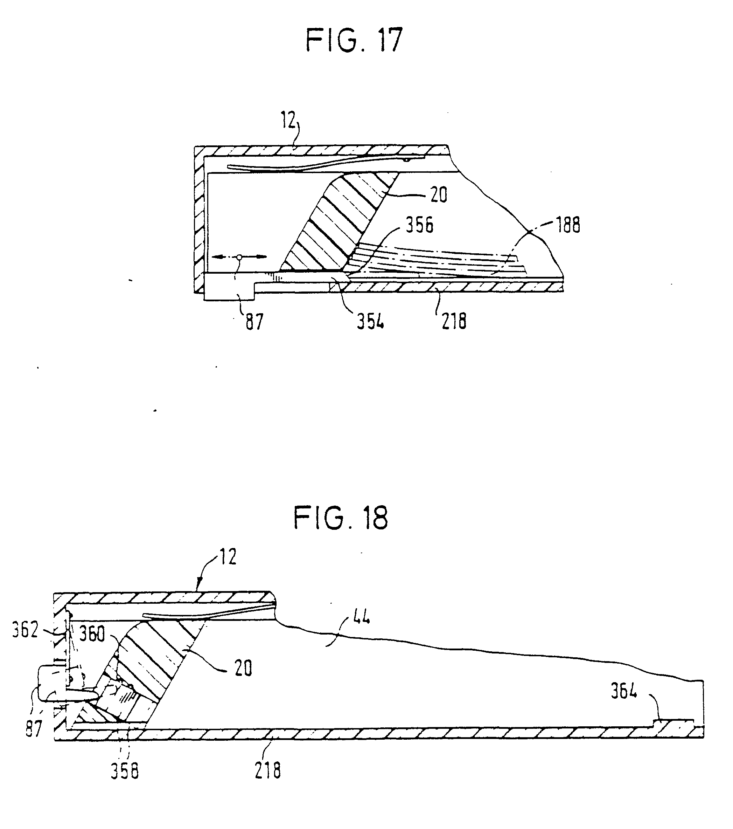

Fig. 17 zeigt im Teillängsschnitt eine Ausführungsform, bei der die Trenneinrichtung wahlweise durch manuellen Eingriff gesperrt werden kann. Hierbei ist eine Stufe 354 in Bewegungsrichtung des Schiebers 14 verschieblich unter dem Separatorsteg 20 in dem Gehäuse 12 angeordnet, wobei die Verschiebung von Hand mittels einer durch den Gehäuseboden 218 ragende Taste 87 erfolgen kann. In der mit ausgezogenen Linien dargestellten Position ist die Trenneinrichtung wirksam (Normalbetrieb). Wird jedoch die Taste 87 mit der Stufe 354 nach rechts verlagert, so greift das keilartig ausgebildete Ende 356 unter die ihm zugekehrt liegende Kante des im Stapel untersten Blattes 188 und hebt diese auf die Stufe 354, so daß der Durchlaßspalt unter dem Separatorsteg 20 « geschlossen » ist. Zur automatischen Rückstellung der Stufe 354 kann diese mit einer federnden Nase 91 (nicht dargestellt) versehen sein.

Die Stapelentnahmefunktion ist auch bei der Ausführungsform nach Fig. 18 (Teillängsschnitt) manuell steuerbar. Der Separatorsteg 20 hat hier eine Durchbrechung, in der verschieblich ein Sperrklotz 358 angeordnet ist. In der mit ausgezogenen Linien dargestellten Position ist der Bildwechsler auf Wechselfunktion geschaltet, wobei der Sperrklotz 358 mittels Nocken 360 in einer entsprechenden Öffnung der Durchbrechung einrastet. Wird er durch Druck auf einen Knopf 87, der federnd an einer angeformten Feder 362 sitzt und mit dem Gehäuse 12 verbunden ist, in die mit gestrichelten Linien dargestellte Sperrposition verlagert, in welcher er ebenfalls mittels Nocken 360 verrastbar ist, so wird der Durchtrittsspalt blockiert, und alle Blätter des Stapels werden heraustransportiert. Läuft dann der Sperrklotz 358 auf einen an den Gehäuseboden 218 angeformten Anschlag 364 auf, wird er wieder in seine Ruheposition zurückgeschoben, und der Wechsler ist wieder auf Funktion « Wechseln » geschaltet.

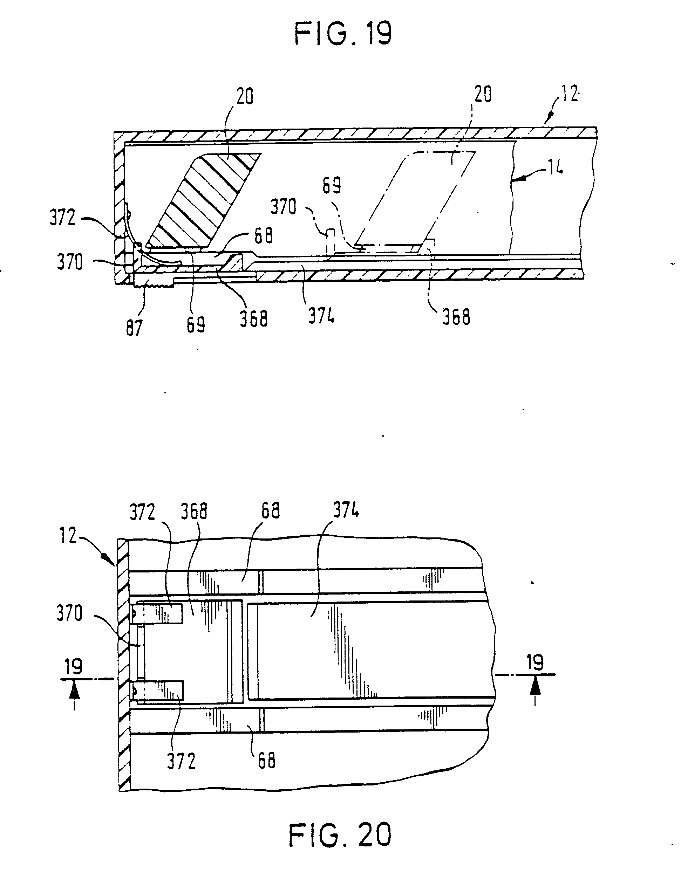

Fig. 19 und 20 zeigen im Teillängsschnitt bzw. in Teildraufsicht eine weitere Ausführungsform einer für die Stapelentnahme umschaltbaren Trenneinrichtung. Die Stufe 68 ist sehr schmal und doppelt ausgeführt. Das den Durchtrittsspalt begrenzende Teil 69, das federnd im Separatorsteg 20 angeordnet ist, hat eine Aussparung gegenüber der Lücke zwischen den beiden Stufen 68. An den Gehäuseboden 218 ist eine eindrückbare, zurückfedernde Taste 87 angeformt, die einen Blockierschuh 368 anhebt, der mit einem frontseitigen Fortsatz den Durchtrittsspalt sperrt, indem er sich vor die Unterkante des Separatorsteges legt, und mit einem rückseitigen Fortsatz 370 hinter den Separatorsteg greift. Beidseits dieses letztgenannten Fortsatzes drükken Blattfederchen 372 den Blockierschuh in Richtung Gehäuseboden. Wird auf die Taste 87 gedrückt und der Blockierschuh in Mitnahmeverbindung mit dem Separatorsteg gebracht, wobei die Trennfunktion blockiert ist, und nun am Schieber 14 gezogen, so wird der Blockierschuh einfach mitgenommen. Beim Wiedereinschub drücken die Federchen 372 den Schuh dann wieder in die Freigabeposition, die muldenförmig eingetieft hinter der Auflauframpe 374 vorgesehen ist.

## Patentansprüche

1. Vorrichtung zum zyklischen Umschichten eines Stapels rechtekkiger Blätter, insbesondere eines Stapels von Fotoabzügen, mit einem ersten (12) und einem zweiten (14) Rahmenteil, die relativ zueinander und parallel zur Stapelhauptebene bewegbar sind, und mit Mitteln, die bei einer Auseinanderbewegung der Rahmenteile ein Einzelblatt an einem Stapelende abnehmen und beim Zusammenführen der Rahmenteile am andern Stapelende zufügen, welche Mittel umfassen :
- eine Trenneinrichtung (68, 69, 72) zum Abtrennen des Einzelblattes vom Stapel,
- eine Zufuhreinrichtung (22) zum Zuführen von Blättern zur Trenneinrichtung,
- eine erste Halteeinrichtung (26, 28) zum Halten des abgetrennten Einzelblattes im ersten Rahmenteil,
- eine zweite Halteeinrichtung (20) zum Halten des Reststapels im zweiten Rahmenteil, und
- eine Leiteinrichtung (32, 79, 80) zum Führen des abgetrennten Einzelblattes zwecks Rückführung auf die andere Seite des Reststapels, sowie mit einer Inaktivierungseinrichtung, nach deren Betätigung der Gesamtstapel mittels des zweiten Rahmenteils aus dem ersten Rahmenteil herausförderbar ist, dadurch gekennzeichnet, daß die Trenneinrichtung einen Durchlaßspalt für das abzutrennende Einzelblatt umfaßt und daß die Inaktivierungseinrichtung ein Sperrorgan (85, 152, 354, 358, 368) umfaßt, das den Eintritt des Einzelblattes in den Durchlaßspalt blokkiert.

2. Vorrichtung nach Anspruch 1, dadurch gekennzeichnet, daß das Sperrorgan (85, 152, 354, 358, 368) in den Durchlaßspalt hinein verlagerbar ist.

3. Vorrichtung nach Anspruch 1 oder 2, dadurch gekennzeichnet, daß die Inaktivierungseinrichtung manuell betätigbar ist.

4. Vorrichtung nach einem der Ansprüche 1-3, dadurch gekennzeichnet, daß das Sperrorgan (85) einstückig mit einem Betätigungsorgan (87) ausgebildet ist.

5. Vorrichtung nach einem der Ansprüche 1-4, dadurch gekennzeichnet, daß dem Sperrorgan (85) eine relativ zu den Rahmenteilen beweglichetaste (87) zugeordnet ist.

6. Vorrichtung nach Anspruch 2, dadurch gekennzeichnet, daß das Sperrorgan (152) bei zusammengeführten Rahmenteilen (12, 14) in Sperrposition verlagerbar und nach dem nächsten Rahmenteil-Bewegungszyklus automatisch wieder in seine Entsperrposition rückverlagert ist.

7. Vorrichtung nach Anspruch 6, dadurch gekennzeichnet, daß die Rückverlagerung des Sperrorgans (152) durch Auflaufen auf Anschläge (156) während des Bewegungszyklus erfolgt.

8. Vorrichtung nach Anspruch 5, bei der eines der Rahmenteile als Gehäuse (12), das andere als ein durch eine Gehäuseöffnung aus dem Gehäuse herausziehbarer Schieber (14) ausgebildet ist, dadurch gekennzeichnet, daß die Taste (87) im Bereich der der Gehäuseöffnung gegenüberliegenden Gehäusekante (88) angeordnet ist.

9. Vorrichtung nach Anspruch 8, dadurch gekennzeichnet, daß die Taste (87) in eine Gehäuseausnehmung versenkt ist.

10. Vorrichtung nach Anspruch 8, dadurch gekennzeichnet, daß die Taste (87) in einer zur Ebene der Gehäuseöffnung im wesentlichen parallelen Gehäusewandung (88) vorgesehen ist.

11. Vorrichtung nach einem der Ansprüche 1-7, dadurch gekennzeichnet, daß das Sperrorgan eine in Richtung der Rahmenteilbewegung verlagerbare Steuerbrücke (85) umfaßt.

12. Vorrichtung nach Anspruch 11, dadurch gekennzeichnet, daß die Steuerbrücke (85) über Keilführungen (89) aus ihrer entsperrenden Position im wesentlichen senkrecht zu ihrer Verlagerungsrichtung in ihre Sperrposition hebbar ist.

13. Vorrichtung nach einem der Ansprüche 1-7, dadurch gekennzeichnet, daß das Sperrorgan eine Stufe (354) umfaßt, die manuell verlagerbar ist und dabei den Blattstapel quer zu seiner Hauptebene vom Durchlaßspalt weg verlagert.

14. Vorrichtung nach einem der Ansprüche 1-7, dadurch gekennzeichnet, daß das Sperrorgan (358) im einen (14), eine Betätigungstaste (87) für dieses im andern (12) Rahmenteil vorgesehen sind.

15. Vorrichtung nach einem der vorangehenden Ansprüche, dadurch gekennzeichnet, daß bei durch das Sperrorgan (85) blockiertem Durchlaßspalt die Blätter von der Zufuhreinrichtung (22) freigegeben werden.

16. Vorrichtung nach Anspruch 15, dadurch gekennzeichnet, daß die Zufuhreinrichtung (22) mit den Blättern reibungsschlüssig in Wirkverbindung steht.

17. Vorrichtung nach einem der vorangehenden Ansprüche, bei der das erste Rahmenteil ein Gehäuse (12) mit einem Sichtfenster (35) ist, aus dem das zweite Rahmenteil in Form eines Schiebers (14) parallel zum Sichtfenster herausziehbar ist, dadurch gekennzeichnet, daß der Schieber beim Herausziehen den Stapel aus dem Gehäuse heraustransportiert mit Ausnahme des dem Fenster abgekehrt liegenden Blattes, das im Gehäuse zurückgehalten und beim Wiedereinschub des Schiebers auf die dem Sichtfenster zugekehrte Seite des Stapels gefördert wird.

18. Vorrichtung nach Anspruch 17, dadurch gekennzeichnet, daß das Sperrorgan (368) von einer dem Sichtfenster (35) gegenüberliegenden Gehäusewandung her betätigbar ist.

19. Vorrichtung nach einem der vorangehenden Ansprüche, dadurch gekennzeichnet, daß das Sperrorgan (85) den Eintritt des Einzelblattes in den Durchlaßspalt über im wesentlichen den gesamten Auszugshub der Rahmenteile blockiert.

20. Vorrichtung nach Anspruch 17, dadurch gekennzeichnet, daß der Schieber eine innere Querwandung (20) mit dem Sichtfenster (35) abgekehrten Ausschnitten aufweist, in die das Sperrorgan hinein verlagerbar ist.

## Claims

1. Device for the cyclic rearrangement of a pile of rectangular or square sheets, especially a pile of photographic prints, with a first frame part (12) and a second frame part (14) which can be moved relative to one another, the movement being parallel to the principal plane of the pile, and with means which, when the frame parts are moved away from one another, remove a single sheet from one end of the pile and, when the frame parts are moved together, put the sheet back on the other end of the pile, which means comprise :
- a separating means (68, 69, 72) for separating the single sheet from the pile,
- a feeding means (22) for feeding sheets to the separating means,
- a first retaining means (26, 28) for holding the separated single sheet in the first frame part,
- a second retaining means (20) for holding the remainder of the pile in the second frame part, and
- a guide means (32, 79, 80) for guiding the separated single sheet to the other end of the pile, and with a de-activating means, after operation of which the complete pile can be removed from the first frame part by means of the second frame part, characterized in that the separating means comprises a through-gap for the single sheet to be separated, and the de-activating means comprises a blocking member (85, 152, 354, 358, 368) for blocking the entrance of the single sheet into the throughgap.

2. Device according to claim 1 characterized in that the blocking member (85, 152, 354, 358, 368) is displaceable into the through-gap.

3. Device according to claim 1 or 2 characterized in that the de-activating means is manually operable.

4. Device according to any one of claims 1 to 3, characterized in that the blocking member (85) is formed integrally with an actuating member (87).

5. Device according to any one of claims 1 to 4, characterized in that there is associated with the blocking member (85) a key (87) which is movable relative to the frame parts.

6. Device according to claim 2, characterized in that the blocking member (152) is displaceable into the blocking position when the frame parts (12, 14) are pushed together and, after the next cycle of movement of the frame parts, is automatically displaced back into its unblocking position.

7. Device according to claim 6, characterized in that the return displacement of the blocking member (152) is effected by running onto stop members (156) during the cycle of movement.

8. Device according to claim 5 in which one of the frame parts is designed as a housing (12) and the other as a slider member (14) which can be removed from the housing through an aperture in the housing, characterized in that the key (87) is arranged in the region of the edge (88) of the housing lying opposite the aperture.

9. Device according to claim 8, characterized in that the key (87) is recessed into a recess in the housing.

10. Device according to claim 8, characterized in that the key (87) is provided in a housing wall (88) substantially parallel to the plane of the housing aperture.

11. Device according to any one of claims 1 to 7, characterized in that the blocking member comprises a control bridge (85) displaceable in the direction of movement of the frame parts.

12. Device according to claim 11, characterized in that the control bridge (85) can be lifted over wedge-like guide members (89) out of its unblocking position substantially at right angles to the direction in which it is displaced into its blocking position.

13. Device according to any one of claims 1 to 7, characterized in that the blocking member comprises a step (354) which is manually displaceable and when displaced moves the pile of sheets away from the through-gap transversely to its principal plane.

14. Device according to any one of claims 1 to 7, characterized in that the blocking member (358) is provided in one frame part (14) and a control key (87) for this blocking member is provided in the other frame part (12).

15. Device according to any one of the preceding claims, characterized in that when the through-gap is blocked by the blocking member (85), the sheets are released by the feeding means (22).

16. Device according to claim 15, characterized in that the feeding means (22) is in working connection with the sheets through the action of friction.

17. Device according to any one of the preceding claims in which the first frame part is a housing (12) with a viewing window (14), from which housing the second frame part, in the form of a slider member (14), can be withdrawn in parallel to the viewing window, characterized in that the slider member, on withdrawal, transports the pile out of the housing with the exception of the sheet remote from the window, which is retained in the housing and which, when the slider member is pushed back in, is conveyed to the end of the pile facing the viewing window.

18. Device according to claim 17, characterized in that the blocking member (368) is operable from a housing wall lying opposite the viewing window (35).

19. Device according to any one of the preceding claims, characterized in that the blocking member (85) blocks the entrance of the single sheet into the through-gap over substantially the whole of the withdrawal movement of the frame parts.

20. Device according to claim 17, characterized in that the slider member has an inner transverse wall (20) having recesses turned away from the viewing window (35), into which recesses the blocking member can be displaced.

## Revendications

1. Dispositif de reclassement cyclique d'une pile de feuilles rectangulaires, notamment une pile de clichés photographiques, comportant un premier élément en forme de cadre (12) et un second élément en forme de cadre (14), qui peuvent être déplacés l'un par rapport à l'autre et parallèlement au plan principal de la pile, et des moyens, qui, lors de l'écartement des éléments en forme de cadres, prélèvent une feuille individuelle sur une extrémité de la pile et lors d'un emboîtement des éléments en forme de cadre ramène la feuille sur l'autre extrémité de la pile, lesquels moyens comprennent :
- un dispositif de séparation (20/226) servant à séparer la feuille individuelle (188) de la pile,
- un dispositif d'amenée (22) servant à amener des feuilles au dispositif de séparation,
- un premier dispositif de retenue (26, 28) servant à retenir la feuille individuelle dans le premier élément en forme de cadre, et
- un second dispositif de retenue (20) servant à retenir la pile restante dans le second élément en forme de cadre, et
- un dispositif de guidage (32, 79, 80) servant à guider la feuille individuelle séparée en vue de la ramener sur l'autre face de la pile restante, ainsi qu'un dispositif de mise à l'état inactif, après actionnement duquel ensemble de la pile peut être extrait du premier élément en forme de cadre, au moyen du second élément en forme de cadre, caractérisé en ce que le dispositif de séparation comprend une fente de passage pour la feuille individuelle à séparer et en ce que le dispositif de mise à l'état inactif comporte un organe de blocage (85, 152, 354, 358, 368) qui bloque la feuille individuelle dans la fente de passage.

2. Dispositif selon la revendication 1, caractérisé en ce que l'organe de blocage (85, 152, 354, 358, 368) peut être déplacé dans la fente de passage.

3. Dispositif selon la revendication 1 ou 2, caractérisé en ce que le dispositif de mise à l'état inactif peut être actionné manuellement.

4. Dispositif selon l'une des revendications 1-3, caractérisé en ce que l'organe de blocage (85) est réalisé d'un seul tenant avec un organe d'actionnement (87).

5. Dispositif selon l'une des revendications 1-4, caractérisé en ce qu'une touche (87) mobile par rapport aux éléments formant cadre est associée à l'organe de blocage (85).

6. Dispositif selon la revendication 2, caractérisé en ce que l'organe de blocage (152) est déplaçable en position de blocage lorsque les éléments en forme de cadre (12, 14) sont ramenés ensemble et revient à nouveau automatiquement dans sa position de déblocage après le cycle suivant de déplacement des parties en forme de cadre.

7. Dispositif selon la revendication 6, caractérisé en ce que le déplacement en retour de l'organe de blocage (152) s'effectue pendant le cycle de déplacement avec venue sur des butées (156).

8. Dispositif selon la revendication 5, dans lequel l'un des éléments en forme de cadre est réalisé sous forme d'un boîtier (12), l'autre élément sous forme d'un tiroir (14) que l'on peut extraire du boîtier à travers une ouverture du boîtier, caractérisé en ce que la touche (87) est disposée dans la zone du bord (88) du boîtier située à l'opposé de l'ouverture du boîtier.

9. Dispositif selon la revendication 8, caractérisé en ce que la touche (87) est disposée dans un renfoncement du boîtier.

10. Dispositif selon la revendication 8, caractérisé en ce que la touche (87) est prévue dans une paroi (88) du boîtier sensiblement parallèle au plan de l'ouverture du boîtier.

11. Dispositif selon l'une des revendications 1-7, caractérisé en ce que l'organe de blocage comporte un étrier de commande (85) déplaçable en direction du déplacement d'un élément en forme de cadre.

12. Dispositif selon la revendication 11, caractérisé en ce que l'étrier de commande (85) peut être soulevé à partir de sa position de déblocage sensiblement perpendiculaire à sa direction de déplacement pour venir dans sa position de blocage par des guides en forme de coins (89).

13. Dispositif selon l'une des revendications 1-7, caractérisé en ce que l'organe de blocage comporte une partie étagée (354) qui peut être déplacée manuellement et qui déplace ainsi la pile de feuilles transversalement à son plan principal hors de la fente de passage.

14. Dispositif selon l'une des revendications 1-7, caractérisé en ce que l'organe de blocage (358) est prévu dans l'un des éléments en forme de cadre (14), et qu'une touche d'actionnement (87) de l'organe de blocage est prévue dans l'autre élément en forme de cadre (12).

15. Dispositif selon l'une des revendications précédentes, caractérisé en ce que les feuilles sont libérées par le dispositif d'amenée (22) par la fente de passage bloquée par l'organe de blocage (85).

16. Dispositif selon la revendication 15, caractérisé en ce que le dispositif d'amenée (22) reste en liaison active par frottement avec les feuilles.

17. Dispositif selon l'une des revendications précédentes dans lequel le premier élément en forme de cadre est un boîtier (12) muni d'un voyant (35), hors duquel le second élément en forme de cadre étant un tiroir (14) peut être extrait parallèlement au voyant, caractérisé en ce que le tiroir lors de l'extraction transporte la pile hors du boîtier, à l'exception de la feuille tournée à l'opposé du voyant et qui est amenée retenue dans le boîtier lors d'une réinsertion du tiroir du côté de la pile tournée vers le voyant.

18. Dispositif selon la revendication 17, caractérisé en ce que l'organe de blocage (368) peut être actionné par une paroi du boîtier située à l'opposé du voyant (35).

19. Dispositif selon l'une des revendications précédentes, caractérisé en ce que l'organe de blocage (85) bloque l'entrée de la feuille individuelle dans la fente de passage sur sensiblement la course d'extraction totale des éléments en forme de cadre.

20. Dispositif selon la revendication 17, caractérisé en ce que le tiroir comporte une paroi transversale intérieure (20) comportant des découpes opposées au voyant (35), et dans laquelle peut se déplacer l'organe de blocage.

FIG. 6

FIG. 1

FIG. 2

FIG. 3

EP 0 201 550 B1

FIG. 4

FIG. 5

FIG. 7

FIG. 8

FIG. 9

FIG.10

FIG. 11

FIG.12

FIG.13

EP 0 201 550 B1

FIG.14

FIG.15

FIG.16

EP 0 201 550 B1

## FIG. 17

## FIG. 18

# FIG. 19

# FIG. 20